# EUROPEAN PATENT SPECIFICATION

(11) **EP 0 520 583 B1**
(45) Date of publication and mention of the grant of the patent: **20.12.1995**
(21) Application number: 92201882.5
(22) Date of filing: 24.06.1992
(51) Int. Cl.: H02G 3/06

(54) **Raceway coupling**
Führungskanalkupplung
Accouplement pour canalisation

(30) Priority: 27.06.1991 NL 9101115
(43) Date of publication of application: 30.12.1992
(73) Proprietor: STAGO B.V., NL-1627 LB Hoorn (NL)
(72) Inventor: van der Wulp, Andries Christiaan, NL-1171 DK Badhoevedorp (NL)
(74) Representative: Smulders, Theodorus A.H.J., Ir.

(56) References cited:
- EP-A- 0 083 809
- DE-A- 3 139 287

## Description

This invention relates to a raceway joint comprising two raceway elements and at least one raceway coupling for raceway elements positioned in line, each consisting of a bottom and sidewalls extending substantially perpendicularly to said bottom, the free top edges of the sidewalls having been bent over inwardly to form a transition curve, which raceway coupling comprises a coupling plate having a bent-over upper edge and a lower edge provided with projections, which coupling plate can be placed between the inwardly bent-over edges and the bottoms of the raceway elements.

Such a raceway coupling is disclosed in DE-A-31.39287. This known raceway coupling comprises a coupling plate which at the lower edge thereof is provided with projections which can be inserted in holes provided in the bottom of the raceway elements at fixed intervals. The coupling plate has the shape of a dihedral angle with the vertex located approximately in the middle of the coupling plate. The upper and lower edges of the coupling plate are bent over. By its bent upper edge, the coupling plate is placed under the bent edge of the raceway element, whereafter the projections at the lower end of the plate are placed in the corresponding holes in the bottom of the raceway element, whereafter the bulging coupling plate is buckled by exerting pressure on the bent middle portion thereof and, in buckled position, is retained between the bottom of the raceway elements and the bent top edges thereof. In mounted condition, the coupling plate exerts a resilient pressure force on the bottom of the raceway element, while the projections of the coupling plate, which extend into the holes of the bottoms of the raceway elements, keep the coupling plate in position. This coupling plate can therefore be mounted at only one point and the holes in the raceway element bottoms must be in perfect register with the projections of the coupling plate.

The object of the present invention is to overcome this drawback and to provide a raceway joint which permits the coupling plate to be fitted at any point and accordingly does not require account to be taken of holes present in the bottom of the raceway element for receiving therein the projections of the coupling plate.

To that end, the raceway joint according to the invention is so designed that the terminal ends of the inwardly bent-over top edges of the sidewalls of each raceway element have been bent over through an acute angle to form a retaining collar, while in the web of the coupling plate there has been provided a corrugation approximately saw-tooth shaped in section, extending in the longitudinal direction, the upwardly directed face of the corrugation comprising, at the upper edge thereof, at least one bent-over locking lug engaging the retaining collar in mounted condition, and at least one arcuate bent-over guiding tab projecting above the locking lug, said guiding tab resting against the transition curve of the raceway elements in mounted position of the coupling plate.

In mounted condition, the locking lug at the upper edge of the coupling plate is received in the bent top edges of the two raceway elements, the clamping force being substantially supplied by the mutually matched shape of the top edges of the raceway element and the coupling plate. In mounted position, the locking lug provides for the locking of the coupling plate in a direction perpendicular to the coupling plate. In order to provide for the upper edge of the coupling plate to connect properly to the transition curve of the free upper edge of the raceway element, the upwardly directed face of the corrugation further comprises at least one arcuate bent-over guiding tab projecting above the locking lug, which guiding tab, in mounted position of the coupling plate, rests resiliently against the transition curve of the raceway element.

Preferably, the upwardly extending face of the corrugation is provided with a series of alternately arranged locking lugs and guiding tabs, separated from each other by cuts.

One embodiment of the raceway coupling according to the invention will now be further elucidated, with reference to the accompanying drawings, in which:
Fig. 1 is a section of a raceway element provided with bent-over top edges;
Fig. 2 is a side elevation of a coupling plate according to the invention;
Fig. 3 shows the method of mounting a coupling plate according to the invention;
Fig. 4 shows to an enlarged scale the positions of the locking lug and guiding tab of the coupling plate during the mounting thereof;
Fig. 5 is a front view of a coupling plate; and
Fig. 6 is a perspective view of a coupling plate.

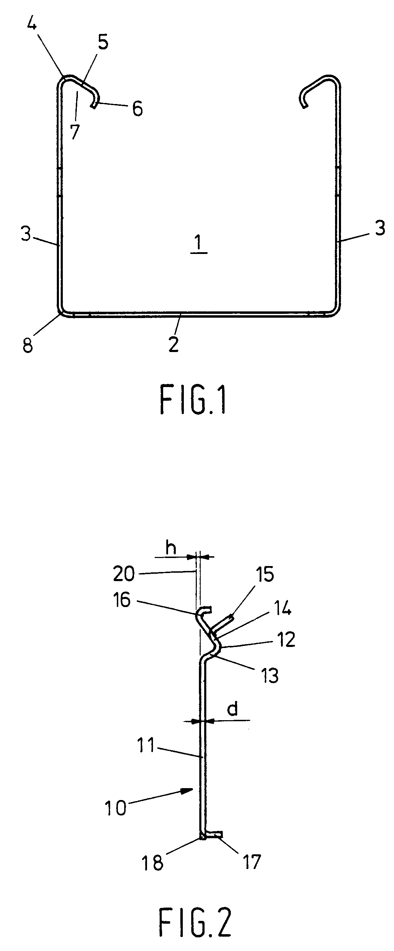

The raceway element 1 according to Fig. 1 comprises a bottom 2 and sidewalls 3, extending approximately perpendicularly to the bottom 2 and connecting thereto via a transition curve 8. The top edges 5 of the sidewalls 3 have been bent over through an angle of approximately 120°, thus forming a transition curve 4. The terminal end of the edge 5 in turn has been bent over through approximately 90° to form a retaining collar 6. The sidewalls 3, the transition curve 4, the edge 5 and the retaining collar 6 form a channel 7 enclosed on three sides. A typical height for the sidewall 3 is approximately 60 mm and the width of the raceway element 1 depends on requirements.

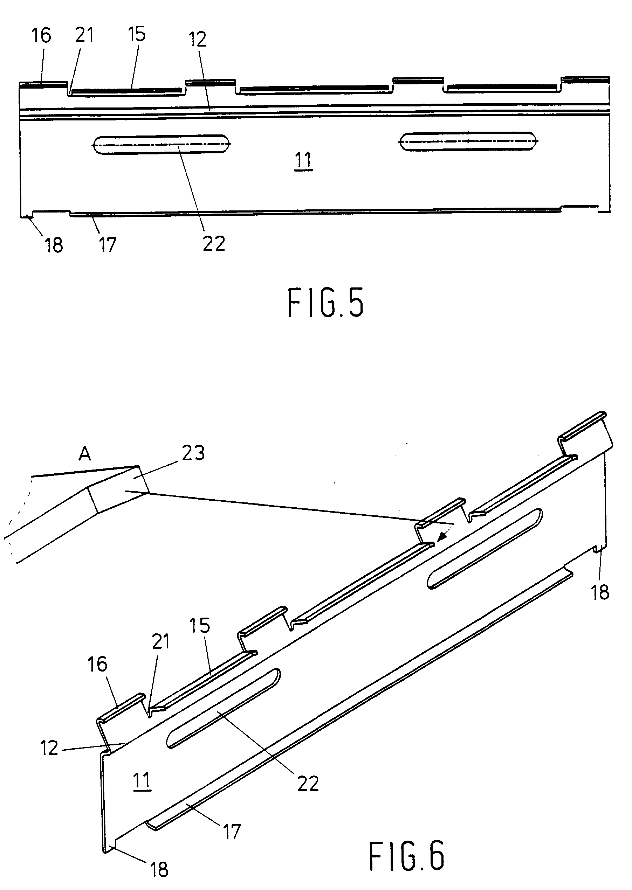

The coupling plate 10 shown in Fig. 2 consists of a flat web 11 having a thickness d of for instance 1.25 mm. At about 3/4 of the height, a corrugation 12 has been provided, which is formed by a downwardly directed face 13 and an upwardly directed face 14 bent over through about 90° relative thereto. The downwardly directed face 13 makes an angle of approximately 120° with the web 11 of the coupling plate 10. The upper edge of the coupling plate (see Figs 5 and 6) consists of alternating locking lugs 15, which extend at an angle of about 90° relative to the upwardly directed face 14 of the corrugation 12, and guiding tabs 16, which project above the locking lugs 15 and likewise have their upper edges bent over. The leftmost point of the guiding tabs 16 shown in Fig. 2 is located beyond the left-hand surface of the web 11 of the coupling plate 10 by a distance h. In other words, the tangent plane 20 to the guiding tab 16 which extends parallel to the web 11 of the coupling plate is located at a distance h from the surface of the coupling plate 10 facing the sidewall 3 of the raceway element 1.

As will appear from Figs 5-6, cuts have been provided in the coupling plate 10 between the guiding tabs 16 and the locking lugs 15, so that the locking lugs 15 can be bent out of the plane of the coupling plate 10 independently of the guiding tabs 16.

As shown in enlarged detail A of Fig. 6, projecting, sharp tips 23, located in the plane of the locking lug 15, have been provided on the locking lugs 15. The tips 23 provide a good grip of the locking lug 15 on the retaining collar 5, 6 of the raceway element.

The larger part of the lower edge 17 of the coupling plate 10 (see Fig. 6) has been bent over in the direction of the corrugation 12 through an angle of about 90°. Provided at the two terminal ends of the coupling plate 10 are clamping lugs 18, which have not been bent over, are accordingly located in the plane of the web 11 of the coupling plate 10 and project beyond the bottom plane of the base flange 17 by a short distance. Provided on the axial centreline of the coupling plate are mutually spaced slotted holes 22, through which the coupling plate 10, if so desired, can be connected to the sidewalls 3 of the raceway element 1 by means of bolts and nuts, these sidewalls 3 having corresponding slotted holes provided in them. It will be clear that the overall height of the coupling plate has been chosen such that it is approximately equal to the distance between the inner surface of the transition curve 4 and the bottom 2 of the raceway element 1, in such a manner that the coupling plate 10 can be placed without deformation in the raceway element and the locking lug 15 in mounted condition is hooked on the retaining collar 6 and the guiding tab 16 is confined bearing on the inner wall of the transition curve 4.

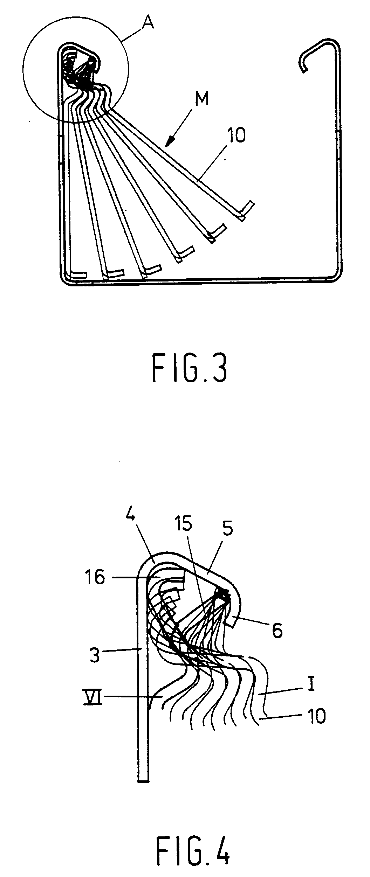

Figs 3 and 4 show the method of mounting a coupling plate 10 in a raceway element 1. The coupling plate 10 is inserted obliquely into the raceway element 1, the locking lug 15 coming to rest against the retaining collar 6. The coupling plate 10 is then swung in the direction indicated by M in Fig. 3 while the guiding tab 16 first comes to rest against the inner surface of the sidewall 3 and then shifts over this sidewall 3 until the guiding tab 16 is confined by and within the transition curve 4. Fig. 4 shows the insertion position of the coupling plate 10 at I and the fully mounted position at VI, the web of the coupling plate 10 coming to rest substantially against the sidewall 3 of the raceway element 1. At the lower end, the coupling plate 10 rests against the transition curve 8 of the raceway element by way of the clamping lugs 18, while the flange 17 remains clear of the bottom 2. The clamping lugs 18 will wedge in the bottom 2 when the raceway elements bend adjacent the coupling as a result of the weight load. The flange 17 prevents an oppositely directed displacement of the ends of the raceway elements.

## Claims

1. A raceway joint comprising two raceway elements (1) and at least one raceway coupling (10) for raceway elements (1) positioned in line, each consisting of a bottom (2) and sidewalls (3) extending substantially perpendicularly to said bottom (2), the free top edges (5) of the sidewalls (3) having been bent over inwardly to form a transition curve (4), which raceway coupling (10) comprises a coupling plate (10) having a bent-over upper edge (15, 16) and a lower edge (17) provided with projections (18), which coupling plate (10) can be placed between the inwardly bent-over edges (5, 6) and the bottoms (2) of the raceway elements (1), characterized in that the terminal ends (6) of the inwardly bent-over top edges (5) of the sidewalls of each raceway element have been bent over through an acute angle to form a retaining collar, while in the web (11) of the coupling plate (10) there has been provided a corrugation (12) approximately saw-tooth shaped in section, extending in the longitudinal direction, the upwardly directed face (14) of the corrugation comprising, at the upper edge thereof, at least one bent-over locking lug (15) engaging the retaining collar (6) in mounted condition, and at least one arcuate bent-over guiding tab (16) projecting above the locking lug (15), said guiding tab (16) resting against the transition curve (4) of the raceway elements (1) in mounted position of the coupling plate (10).

2. A raceway joint according to claim 1, characterized in that the upwardly directed face (14) of the corrugation (12) comprises a series of alternately arranged locking lugs (15) and guiding tabs (16) mutually separated by cuts (21).

3. A raceway joint according to any one of claims 1-2, characterized in that the front edge of each locking lug (15) comprises a projecting, sharp tip (23) located in the plane of the locking lug (15).

4. A raceway joint according to any one of claims 1-3, characterized in that the tangent plane to the guiding tab (16) that extends parallel to the web (11) of the coupling plate (10) is located at a distance (h) from the face of the coupling plate (10) that faces the sidewall (3) of the raceway element (1).

5. A raceway joint according to any one of claims 1-4, characterized in that the base edge (17) of the coupling plate (10) has been bent over through about 90° in the direction of the corrugation (12), at least one clamping lug (18) being provided at each end of the coupling plate (10), said clamping lug (18) projecting beyond the bottom plane of the bent-over base edge (17).

## Patentansprüche

1. Führungskanalverbindung mit zwei Führungskanalelementen (1) und mindestens einer Führungskanalkupplung (10) für in einer Flucht liegende Führungskanalelemente (1), je bestehend aus einem Boden (2) und im wesentlichen rechtwinklig auf diesem Boden (2) stehenden Seitenwänden (3), wobei die freien oberen Ränder (5) der Seitenwände (3) unter Bildung eines Übergangsbogens (4) nach innen abgebogen sind, welche Führungskanalkupplung (10) eine Kupplungsplatte (10) umfaßt, deren oberer Rand (15, 16) abgebogen und deren unterer Rand (17) mit Vorsprüngen (18) versehen ist, welche Kupplungsplatte (10) zwischen die nach innen abgebogenen Ränder (5, 6) und die Böden (2) der Führungskanalelemente (1) einsetzbar ist, dadurch gekennzeichnet, daß die Enden (6) der nach innen abgebogenen oberen Ränder (5) der Seitenwände jedes Führungskanalelements unter Bildung eines Einschließkragens um einen spitzen Winkel abgebogen sind, während in dem Steg (11) der Kupplungsplatte (10) eine in Längsrichtung verlaufende, im Schnitt annähernd sägezahnförmige Wellenfalte (12) angeordnet ist, wobei die nach oben gerichtete Fläche (14) der Wellenfalte an deren oberem Rand mit mindestens einer im montierten Zustand den Einschließkragen (6) hintergreifenden abgebogenen Sicherungslippe (15) versehen ist und mit mindestens einer bogenförmigen abgebogenen Führungslippe (16), die die Sicherungslippe (15) überragt, welche Führungslippe (16) bei montierter Kupplungsplatte (10) an dem Übergangsbogen (4) der Führungskanalelemente (1) anliegt.

2. Führungskanalverbindung nach Anspruch 1, dadurch gekennzeichnet, daß die nach oben gerichtete Fläche (14) der Wellenfalte (12) mit einer Reihe abwechselnd angeordneter Sicherungslippen (15) und Führungslippen (16) versehen ist, die durch Einschnitte (21) voneinander getrennt sind.

3. Führungskanalverbindung nach einem der Ansprüche 1-2, dadurch gekennzeichnet, daß der vordere Rand jeder Sicherungslippe (15) mit einer vorspringenden scharfen Spitze (23) versehen ist, die in der Ebene der Sicherungslippe (15) liegt.

4. Führungskanalverbindung nach einem der Ansprüche 1-3, dadurch gekennzeichnet, daß die parallel zu dem Steg (11) der Kupplungsplatte (10) verlaufende Berührungsebene mit der Führungslippe (16) in einem Abstand (h) von der Fläche der Kupplungsplatte (10) liegt, die der Seitenwand (3) des Führungskanalelements (1) zugekehrt ist.

5. Führungskanalverbindung nach einem der Ansprüche 1-4, dadurch gekennzeichnet, daß der Basisrand (17) der Kupplungsplatte (10) um etwa 90° in Richtung der Wellenfalte (12) abgebogen ist, wobei an jedem Ende der Kupplungsplatte (10) mindestens eine Klemmlippe (18) vorgesehen ist, die aus der unteren Ebene des abgebogenen Basisrandes (17) herausragt.

## Revendications

1. Joint pour canalisation comprenant deux éléments pour canalisation (1) et au moins un accouplement pour canalisation (10) pour des éléments pour canalisation (1) alignés, chacun comprenant un fond (2) et des faces latérales (3) qui s'étendent substantiellement perpendiculairement audit fond (2), les bords supérieurs libres (5) des faces latérales (3) étant courbés vers l'intérieur afin de former une courbe de transition (4), ledit accouplement pour canalisation (10) comprenant une plaque d'accouplement (10) ayant un bord supérieur courbé (15, 16) et un bord inférieur (17) muni de saillies (18), ladite plaque d'accouplement (10) étant appropriée à être placée entre les bords (5, 6) courbés vers l'intérieur et les fonds (2) des éléments pour canalisation (1), caractérisé en ce que les extrémités (6) des bords (5) courbés vers l'intérieur des faces latérales de chaque élément pour canalisation ont été courbées par un angle aigu afin de former un col d'arrêt, pendant que l'âme (11) de la plaque d'accouplement (10) a été munie d'un pli onduleux (12) approximativement dentelé en section, s'étendant dans le sens longitudinal, la face orientée vers le haut (14) du pli onduleux comprenant à son bord supérieur au moins une languette de blocage courbée (15) accrochant le col d'arrêt en état monté et un rebord de guidage (16) arqué et courbé s'élevant plus haut que la languette de blocage (15), ledit rebord de guidage (16) reposant contre la courbe de transition (4) des éléments pour canalisation (1) en état monté de la plaque d'accouplement (10).

2. Joint pour canalisation selon la revendication 1, caractérisé en ce que la face orientée vers le haut (14) du pli onduleux (12) comprend une série de languettes de blocage (15) et de lames de guidage (16) appliquées alternativement et mutuellement séparées par des incisions (21).

3. Joint pour canalisation selon une des revendications 1-2, caractérisé en ce que le bord avant de chaque languette de blocage (15) comprend une pointe aiguë saillante (23) située sur le plan de la languette de blocage (15).

4. Joint pour canalisation selon une des revendications 1-3, caractérisé en ce que le plan tangentiel de la lame de guidage (16) qui s'étend parallèlement à l'âme (11) de la plaque d'accouplement (10) est situé à une distance (h) de la face de la plaque d'accouplement (10) orientée vers la face latérale (3) de l'élément pour canalisation (1).

5. Joint pour canalisation selon une des revendications 1-4, caractérisé en ce que le bord de base (17) de la plaque d'accouplement (10) a été courbé approximativement par 90° dans la direction du pli onduleux (12), au moins une languette de serrage (18) étant prévue à chaque extrémité de la plaque d'accouplement (10), ladite languette de serrage (18) s'étendant à l'extérieur du plan inférieur du bord de base (17).
